# FASCICULE DE BREVET EUROPEEN

(11) **EP 3 216 213 B1**
(45) Date de publication et mention de la délivrance du brevet: **30.12.2020**
(21) Numéro de dépôt: 15790562.1
(22) Date de dépôt: 05.11.2015
(51) Int. Cl.: H04N 5/367

(54) **PROCÉDÉ DE DÉTECTION DE PIXELS DÉFECTUEUX**
VERFAHREN ZUM ERKENNEN VON FEHLERHAFTEN BILDPUNKTEN
METHOD FOR DETECTING DEFECTIVE PIXELS

(30) Priorité: 07.11.2014 FR 1460762
(43) Date de publication de la demande: 13.09.2017
(73) Titulaire: Safran Electronics & Defense SAS, 92100 Boulogne-Billancourt (FR)
(72) Inventeur: MALTESE, Dominique, F-92100 Boulogne Billancourt (FR); OUDINOT, Mathieu, F-92100 Boulogne Billancourt (FR); PERDRIAU, Quentin, F-92100 Boulogne Billancourt (FR); DEVICHI, Thomas, F-92100 Boulogne Billancourt (FR)
(74) Mandataire: Cabinet Le Guen Maillet
(86) Numéro de dépôt international: PCT/EP2015/075838
(87) Numéro de publication internationale: WO 2016/071461

(56) Documents cités:
- US-A1- 2003 146 975
- US-A1- 2010 141 810

## Description

La présente invention concerne un procédé de détection de pixels défectueux, un dispositif apte à détecter des pixels défectueux et un système comprenant ledit dispositif. L'invention concerne de plus un procédé de détermination d'un niveau de fiabilité d'au moins une donnée de sortie d'une procédure de traitement d'images utilisant le procédé de détection de pixels défectueux.

Il est connu des systèmes optroniques tels qu'un appareil photographique, une caméra vidéo, des jumelles, un télescope, un viseur, une boule gyrostabilisée (BGS) équipant un système d'observation aéroporté. Ces systèmes optroniques comprennent des dispositifs d'acquisition d'images comprenant au moins un capteur d'images apte à acquérir des images dans diverses gammes de fréquences telles qu'une gamme de fréquences correspondant à des fréquences perceptibles par un œil humain ou une gamme de fréquences située dans l'infrarouge.

Un capteur d'images fournit des images sous forme d'une grille de pixels. Un capteur d'images est constitué d'une grille d'éléments actifs, dits photosites, constitués par exemple, de photodiodes, chaque photodiode étant apte à convertir un faisceau de lumière incident en signal électrique. Chaque pixel d'une image correspond à un photosite sur le capteur d'images. Il est fréquent que certains photosites du capteur d'images aient un défaut, rendant ce photosite inapte à fournir une valeur de pixel valide. Ces défauts peuvent être des défauts de fabrication rendant ces photosites définitivement inaptes à fournir des valeurs de pixel valides, ou des défauts temporaires, se produisant aléatoirement. Un défaut de fabrication peut être détecté par une procédure de vérification des capteurs d'images mise en œuvre suite à la fabrication. Un capteur d'images comportant un nombre de photosites défectueux trop important, *i.e.* fournissant un nombre de pixels non valides, dits pixels défectueux, par image trop important, est alors rejeté. Un capteur d'images possédant un nombre de photosites défectueux acceptable, *i*.*e*. fournissant un nombre de pixels défectueux par image acceptable, est conservé. La position de chaque pixel défectueux fourni par un photosite du capteur d'images défectueux peut alors être répertoriée. La procédure de vérification des capteurs après fabrication est, par contre, inadaptée aux défauts temporaires se produisant aléatoirement puisque, par définition, ces défaut peuvent apparaitre à tout moment, y compris bien après la fabrication.

Par ailleurs, les systèmes optroniques comprennent en général un ou plusieurs modules de traitement d'images pouvant être mis en œuvre par un dispositif dédié ou sous forme logiciel. Les modules de traitement d'images peuvent offrir de multiples fonctionnalités comme par exemple une fonctionnalité d'amélioration d'un rendu des images acquises par le capteur d'images, une fonctionnalité de détection d'objets dans une ou plusieurs images, ou encore une fonctionnalité de suivi d'objets dans une séquence d'images successives. Un module de traitement d'images est alors apte à fournir des données de sortie, comme par exemple, des images améliorées, des coordonnées d'un objet détecté, une vitesse et une direction de mouvement d'un objet suivi. Ces données de sortie peuvent ensuite être utilisées pour un affichage sur un dispositif d'affichage tel que par exemple, un écran, un afficheur tête haute, un oculaire de viseur ou un oculaire de jumelles, des lunettes intelligentes, et/ou pour une sauvegarde dans un dispositif de stockage et/ou pour déclencher une alarme destinée à un opérateur.

Un module de traitement d'images efficace doit fournir des données de sortie ayant un niveau de fiabilité important, voire maximum. Une donnée de sortie ayant un niveau de fiabilité faible peut, en effet, provoquer une mauvaise interprétation d'un contenu d'une image ou une alarme non justifiée. Le niveau de fiabilité d'une donnée de sortie d'un module de traitement d'images dépend grandement d'une qualité des images sur lesquelles sont appliqués des traitements. La qualité d'une image dépend de plusieurs facteurs, l'un de ces facteurs étant le nombre de pixels défectueux contenus dans l'image. Il est donc important pour fiabiliser chaque donnée de sortie d'un système optronique, de détecter les pixels défectueux afin que leur présence soit prise en compte par le module de traitement d'images.

Il est connu des systèmes optroniques comprenant un module de détection de pixels défectueux intervenant entre un dispositif d'acquisition d'images et un module de traitement d'image. Un module de détection de pixels défectueux est un module de traitement d'images dédié à une détection de pixels défectueux dans une image. Le module de détection de pixels défectueux reçoit des images du dispositif d'acquisition d'images, et fournit au module de traitement d'images des informations représentatives de pixels défectueux détectés dans les images. De cette manière, le module de traitement d'images peut prendre en compte les pixels défectueux détectés afin de contrôler le niveau de fiabilité des données de sortie du module de traitement d'images. Par exemple la demande de brevet américaine US 2003/146975 A1 divulgue un procédé de détection de pixels transitoirement défectueux dans lequel les contours d'un pixel sont calculés. Si ces contours sont au-dessus d'un seuil donné, le pixel est estimé défectueux. Si le même pixel est estimé défectueux dans un nombre d'images supérieur à un autre seuil, il est remplacé par une valeur interpolée.

Toutefois, une intégration d'un module de détection de pixels défectueux dans un système optronique vient augmenter un coût de fabrication et une complexité de mise en œuvre du système optronique. De plus, le module de détection de pixels défectueux et le module de traitement d'images mettent généralement en œuvre des procédures redondantes. Par exemple, il est courant que chacun des modules doivent mettre en œuvre une procédure de parcours des pixels d'une image. L'intégration d'un module de détection de pixels défectueux séparé du module de traitement d'images ne permet pas de rationaliser la mise en œuvre de ces procédures redondantes et d'éviter de les mettre en œuvre dans les deux modules. Par exemple, la procédure de parcours des pixels de l'image est généralement mise en œuvre une première fois dans le module de détection de pixels défectueux et une seconde fois dans le module de traitement d'images.

L'invention a pour objectif de résoudre les problèmes mentionnés ci-dessus. L'invention vise notamment à proposer une méthode et un dispositif aptes à détecter des pixels défectueux, la méthode créant une synergie entre un module de détection de pixels défectueux et le module de traitement d'images. L'invention vise en particulier à ce que des résultats de procédures mises en œuvre dans le module de traitement d'images puissent être réutilisés lors de la mise en œuvre du module de détection de pixels défectueux de manière à obtenir une réduction d'un coût calculatoire de mise en œuvre du module de détection de pixels défectueux. Par ailleurs, l'invention vise à fournir une méthode permettant de déterminer ou d'optimiser un niveau de fiabilité de données de sortie du module de traitement d'images utilisant la méthode apte à détecter des pixels défectueux selon l'invention.

A cet effet, selon un premier aspect de la présente invention, la présente invention concerne un procédé de détection de pixels défectueux compris dans une procédure de traitement d'images comprenant une procédure de traitement de pixel, la procédure de traitement de pixel étant appliquée à des pixels d'au moins une image issue d'un capteur d'images, chaque pixel correspondant à un élément actif du capteur d'images, dit photosite, apte à convertir un faisceau de lumière incident en signal électrique, chaque pixel étant associé à une valeur de classification représentative d'un état dudit pixel. Le procédé comprend l'étape suivante : appliquer une procédure combinée de traitement de pixel et de détection de pixel défectueux à chaque pixel d'une image comprenant, pour chaque pixel: appliquer la procédure de traitement de pixel audit pixel ; analyser un résultat de la procédure de traitement de pixel ; en cas d'obtention d'un résultat singulier représentatif d'un défaut sur un photosite du capteur d'images ayant fourni ledit pixel, incrémenter une variable représentative d'un nombre de détections d'un résultat singulier pour ledit pixel ; et associer ledit pixel à une valeur de classification représentative d'un pixel défectueux lorsque ladite variable atteint un premier seuil représentatif d'un nombre maximum de résultats singuliers.

De cette manière, les résultats de la procédure de traitement de pixel sont réutilisés pour détecter des pixels défectueux.

Selon un mode de réalisation, le procédé est appliqué à une séquence d'images successives issues du capteur d'images et le premier seuil est un nombre maximum de résultats singuliers admissible sur une période de temps correspondant à un nombre d'images égal à un deuxième seuil.

Selon un mode de réalisation, lorsqu'un pixel d'une première image est associé à une valeur de classification représentative d'un pixel défectueux, ledit pixel est considéré comme défectueux tant que la procédure de traitement de pixel ne donne pas, pour ledit pixel, un résultat non singulier, non représentatif d'un défaut sur un photosite du capteur d'images ayant fourni ledit pixel, pendant une période de temps correspondant à un nombre d'images successives égal à un troisième seuil.

De cette manière, on s'assure qu'un pixel est bien dans un état stable avant de décider que ledit pixel n'est plus dans un état défectueux.

Selon un mode de réalisation, une procédure de réinitialisation périodique à une valeur de classification représentative d'un pixel non défectueux est appliquée à la valeur de classification associée à chaque pixel, la réinitialisation périodique se faisant avec une période prédéfinie correspondant à un nombre d'images égal à un quatrième seuil.

Selon un deuxième aspect de la présente invention, la présente invention concerne un procédé de détermination d'un niveau de fiabilité d'au moins une donnée de sortie d'une procédure de traitement d'images, chaque donnée de sortie étant obtenue à partir d'au moins un résultat d'une procédure de traitement de pixel comprise dans la procédure de traitement d'images. Le procédé comprend les étapes suivantes : appliquer le procédé de détection de pixels défectueux selon le premier aspect ; déterminer le niveau de fiabilité de chaque donnée de sortie en fonction de la valeur de classification associée à chaque pixel impliqué dans un résultat de la procédure de traitement de pixel permettant d'obtenir ladite donnée de sortie.

Selon un mode de réalisation, le procédé comprend, en outre, pour chaque donnée de sortie, une étape de décision d'utilisation ou de remplacement de ladite donnée de sortie en fonction du niveau de fiabilité de ladite donnée de sortie, une donnée de sortie étant utilisée pour un affichage de ladite donnée de sortie et/ou une sauvegarde de ladite donnée de sortie et/ou un déclenchement d'une alarme correspondant à ladite donnée de sortie.

Selon un troisième aspect de la présente invention, la présente invention concerne un dispositif apte à déterminer un niveau de fiabilité d'une donnée de sortie d'un dispositif de traitement d'images comprenant un module de traitement de pixels apte à traiter des pixels d'au moins une image issue d'un capteur d'images, chaque pixel correspondant à un élément actif du capteur d'images, dit photosite, apte à convertir un faisceau de lumière incident en signal électrique. Le dispositif comprend les moyens suivants : des moyens pour obtenir un résultat d'une mise en œuvre du module de traitement de pixels sur un pixel; des moyens pour identifier un résultat du module de traitement d'images singulier, représentatif d'un défaut sur un photosite du capteur d'images ayant fourni un pixel, des moyens pour incrémenter une variable représentative d'un nombre de résultats singuliers obtenus pour un pixel ; des moyens pour associer un pixel à une valeur de classification représentative d'un pixel défectueux lorsque ladite variable atteint un premier seuil représentatif d'un nombre maximum de résultats singuliers admissible ; des moyens pour déterminer le niveau de fiabilité de chaque donnée de sortie en fonction de la valeur de classification associée à chaque pixel impliqué dans un résultat de la procédure de traitement de pixels permettant d'obtenir ladite donnée de sortie.

Selon un quatrième aspect de la présente invention, la présente invention concerne un dispositif de traitement d'images comprenant un module de traitement de pixels apte à traiter des pixels d'au moins une image issue d'un capteur d'images et un dispositif selon le troisième aspect.

Selon un cinquième aspect de la présente invention, la présente invention concerne un système optronique comprenant un système d'acquisition d'images muni d'un capteur d'images, un dispositif de traitement d'images selon le quatrième aspect et un dispositif d'affichage d'images et/ou de stockage d'images.

Selon un sixième aspect de l'invention, l'invention concerne un produit programme d'ordinateur, caractérisé en ce qu'il comporte des instructions pour mettre en œuvre, par un dispositif, le procédé selon le premier aspect, lorsque ledit programme est exécuté par un processeur dudit dispositif.

Selon un septième aspect de l'invention, l'invention concerne des moyens de stockage, caractérisés en ce qu'ils stockent un programme d'ordinateur comportant des instructions pour mettre en œuvre, par un dispositif, le procédé selon le premier aspect lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente schématiquement un exemple de procédé mis en œuvre par un module de traitement d'images apte à mettre en œuvre l'invention,
La Fig. 2 représente schématiquement un exemple de procédure de traitement d'images, apte à mettre en œuvre l'invention, mis en œuvre par ledit module de traitement d'images,
La Fig. 3A illustre schématiquement un exemple de procédure combinée de traitement de pixel et de détection de pixel défectueux comprise dans la procédure de traitement d'images apte à mettre en œuvre l'invention,
La Fig. 3B représente schématiquement un exemple de procédure de classification de pixel comprise dans la procédure de traitement d'images apte à mettre en œuvre l'invention,
La Fig. 4 représente schématiquement un exemple de procédure de synthèse de résultats de mise en œuvre de la procédure de traitement d'images apte à mettre en œuvre l'invention,
La Fig. 5 représente schématiquement un exemple système optronique comprenant un dispositif de traitement d'images apte à mettre en œuvre l'invention,
La Fig. 6 illustre schématiquement un exemple d'architecture matérielle d'un dispositif apte à mettre en œuvre l'invention.

La description détaillée ci-après s'attache à décrire différents modes de réalisation de la présente invention dans un contexte d'un système optronique apte à acquérir des images et à détecter et à suivre des objets dans ces images. Dans ce contexte, l'invention permet notamment, lorsqu'un objet a été détecté et est suivi par le module de traitement d'images, de confirmer que cet objet est bien un objet réel et non un objet détecté à cause d'une présence de pixels défectueux. Les principes de la présente invention s'appliquent cependant dans un contexte plus large d'un système optronique comportant un dispositif d'acquisition d'images et un module de traitement d'images. Par exemple, la présente invention s'applique à un appareil photo, une caméra vidéo, un télescope et des jumelles numériques. Dans ce contexte plus large, l'invention offre une solution efficace permettant, par exemple, au système optronique, d'appliquer un post-traitement à des images pour atténuer une dégradation provoquée par des pixels défectueux dans une image.

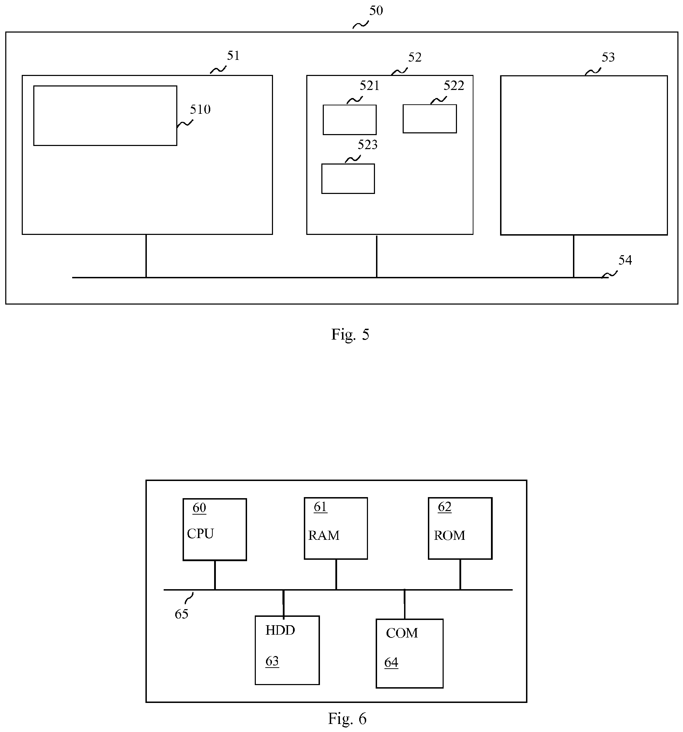

La **Fig. 5** représente schématiquement un exemple de système optronique 50 comprenant un dispositif de traitement d'images apte à mettre en œuvre l'invention. Le système optronique 50 comprend un dispositif d'acquisition d'images 51 comprenant un capteur d'images 510. Par ailleurs, le système optronique 50 comprend un module de traitement d'images 52 et un dispositif d'affichage 53. Un bus de communication 54 permet au dispositif d'acquisition d'images 51, au module de traitement d'images 52 et au dispositif d'affichage 53 de communiquer. Par exemple, le bus de communication 54 permet au dispositif d'acquisition d'images 51 de fournir des images au module de traitement d'images 52. De plus, le bus de communication 54 permet au module de traitement d'images 52 de fournir des données de sortie au dispositif d'affichage 53, comme par exemple des images incluant un objet suivi, des coordonnées d'un objet suivi ou des messages d'alarme suite à une détection d'un objet.

Dans l'exemple de la Fig. 5, le module de traitement d'images 52 comprend un module de traitement de pixels 521, un module de détection de pixels défectueux 522 et un module de traitement de données de sortie 523.

Le module de traitement de pixels 521 est apte à appliquer au moins un traitement à chaque pixel d'une image fournie par le dispositif d'acquisition d'images 51. Le module de traitement de pixels 521 peut par exemple appliquer les traitements suivants à un pixel d'une image : filtrage du pixel pour atténuer ou supprimer un bruit d'acquisition dans l'image ; filtrage du pixel pour améliorer ou détecter des contours d'objets dans l'image ; application d'une méthode de flot optique pour déterminer un mouvement du pixel, un mouvement étant défini par exemple, par une amplitude de mouvement et/ou une direction de mouvement et/ou une vitesse de mouvement.

Comme nous le décrivons par la suite en relation avec les Figes. 3A, 3B et 4, le module de détection de pixels défectueux 522 est apte à détecter des pixels défectueux en s'appuyant sur des résultats du module de traitement de pixels 521 et à attribuer une valeur de classification à chaque pixel en fonction de résultats de la détection. Par ailleurs, le module de détection de pixels défectueux 522 est apte à déterminer un niveau de fiabilité pour chaque donnée de sortie issue de procédures de traitement d'images mises en œuvre par le module de traitement d'images 52 à partir des valeurs de classification des pixels. Le module de traitement de données de sortie 523 est apte à appliquer un traitement aux données de sortie issues de procédures de traitement d'images mises en œuvre par le module de traitement d'images 52 en fonction du niveau de fiabilité de chaque donnée de sortie.

Par la suite nous distinguons deux types de données de sortie : des données de sortie, dites données de sortie intermédiaires, issues de procédures de traitement d'images mises en œuvre par le module de traitement d'images 52 ; des données de sortie, dites données de sortie finale, issues d'une application d'un traitement aux données de sortie intermédiaires par le module de traitement de données de sortie 523.

Dans un mode de réalisation, le module de traitement d'images 52, le module de traitement de pixels 521, le module de détection de pixels défectueux 522, et le module de traitement de données de sortie 523 sont des modules logiciels.

Dans un mode de réalisation, le module de traitement d'images 52 est mis en œuvre par un dispositif, dit dispositif de traitement d'images, mettant en œuvre le module de traitement de pixels 521, le module de détection de pixels défectueux 522, et le module de traitement de données de sortie 523.

Dans un mode de réalisation, le module de traitement d'images 52 est mis en œuvre par un dispositif, dit dispositif de traitement d'images, comprenant un dispositif, appelé dispositif de détection de pixels défectueux, mettant en œuvre le module de détection de pixels défectueux 522, le module de traitement de pixels 521 et le module de traitement de données de sortie 523 étant mis en œuvre soit par un dispositif, soit par un module logiciel séparé.

Dans un mode de réalisation, le dispositif optronique 50 comprend, en outre, un dispositif de communication (non représenté), permettant de communiquer les données de sortie du module de traitement d'images 52 à un dispositif distant (non représenté), et un dispositif de stockage (non représenté), permettant de stocker les données de sortie du module de traitement d'images 52.

Dans un mode de réalisation, lorsque le système optronique 50 est apte à détecter et suivre des objets, le module de traitement d'images 52 comprend en outre un module de détection et de suivi d'objets (non représenté), qui utilise des résultats du module de traitement de pixels 521 pour détecter et suivre des objets dans des images. Par exemple, le module de détection et de suivi d'objets utilise des images résultant d'un filtrage améliorant et/ou détectant des contours pour rechercher des contours d'objets dans lesdites images et mettre en correspondance des objets de plusieurs images successives. De plus, le module de détection et de suivi d'objets utilise des informations de mouvement associées à chaque pixel obtenues par le module de traitement de pixels 521 pour déterminer des mouvements de chaque objet détecté. Les données de sortie intermédiaires sont alors les données de sortie du module de détection et de suivi d'objets et sont constituées de coordonnées d'au moins un objet détecté et d'informations de mouvement de chaque objet détecté.

La **Fig. 6** illustre schématiquement un exemple d'architecture matérielle d'un dispositif apte à mettre en œuvre le procédé de traitement d'images selon l'invention. Dans l'exemple de la Fig. 6, l'architecture matérielle est celle du dispositif de détection de pixels défectueux. Cependant, cet exemple d'architecture matérielle pourrait aussi être celle du dispositif de traitement d'images, lorsque le dispositif de traitement d'images ne comprend pas de dispositif spécifique dédié à une mise en œuvre du module de détection de pixels défectueux 522 mais possède des moyens permettant la mise en œuvre du module de détection de pixels défectueux 522.

Selon l'exemple d'architecture matérielle représenté à la Fig. 6, le dispositif de détection de pixels défectueux comprend alors, reliés par un bus de communication 65 : un processeur ou CPU (« Central Processing Unit » en anglais) 60 ; une mémoire vive RAM (« Random Access Memory » en anglais) 61 ; une mémoire morte ROM (« Read Only Memory » en anglais) 62 ; une unité de stockage tel qu'un disque dur HDD (« Hard Disk Drive » en anglais) et/ou un lecteur de support de stockage, tel qu'un lecteur de cartes SD (« Secure Digital » en anglais) 63 ; au moins une interface de communication 64 permettant au dispositif de détection de pixels défectueux de communiquer avec des modules du dispositif de traitement d'images comme par exemple le module de traitement de pixels 521, le module de traitement de données de sortie 523 et le module de détection et de suivi d'objet, lorsque ce dernier est présent. L'unité de stockage 63 peut stocker temporairement des données de sortie intermédiaires, par exemple, le temps de déterminer un niveau de fiabilité de chaque donnée de sortie.

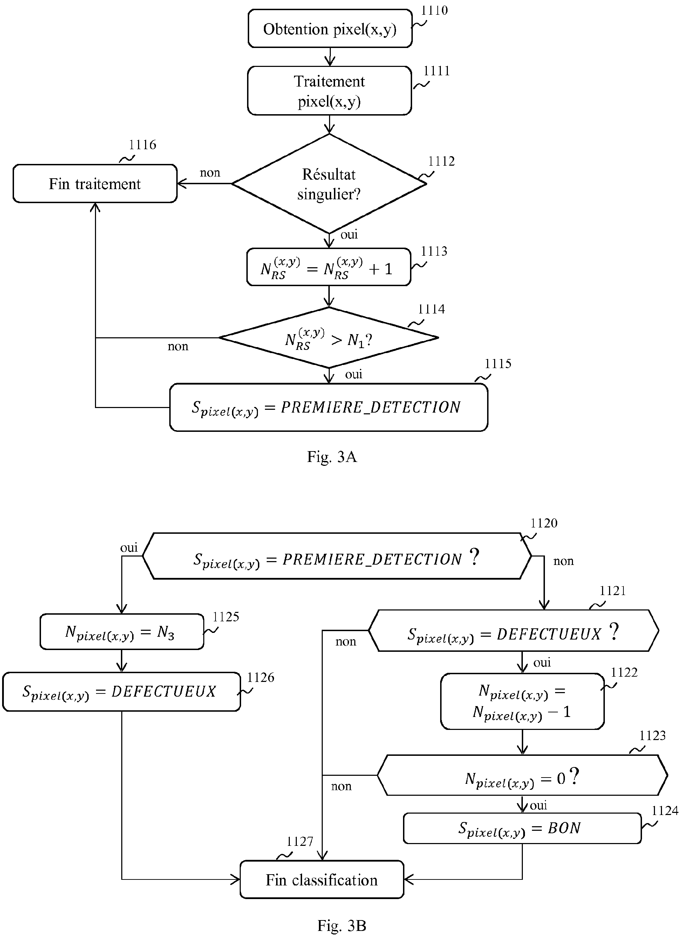

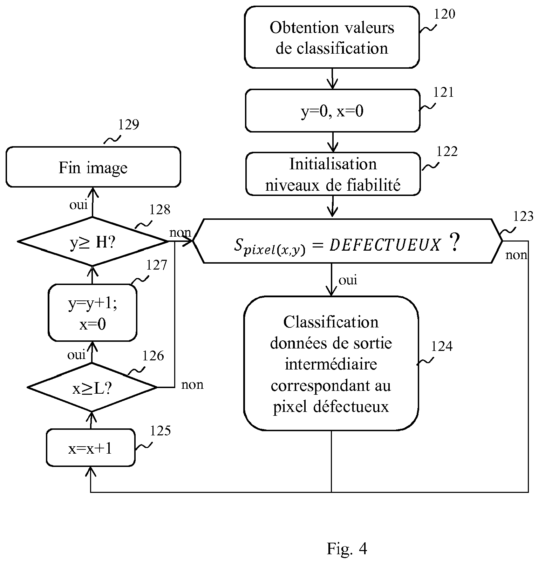

Le processeur 60 est capable d'exécuter des instructions chargées dans la RAM 61 à partir de la ROM 62, d'une mémoire externe (non représentée), d'un support de stockage (tel qu'une carte SD), ou d'un réseau de communication. Lorsque le dispositif de détection de pixels défectueux est mis sous tension, le processeur 60 est capable de lire de la RAM 61 des instructions et de les exécuter. Ces instructions forment un programme d'ordinateur causant la mise en œuvre, par le processeur 60, de tout ou partie des algorithmes, étapes décrits en relation avec les Figs. 3A, 3B et 4.

Tout ou partie des algorithmes et étapes décrits en relation avec les Figs. 3A, 3B et 4 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par un dispositif, une machine ou un composant dédié, par exemple un FPGA (« Field-Programmable Gate Array » en anglais) ou un ASIC (« Application-Specific Integrated Circuit » en anglais).

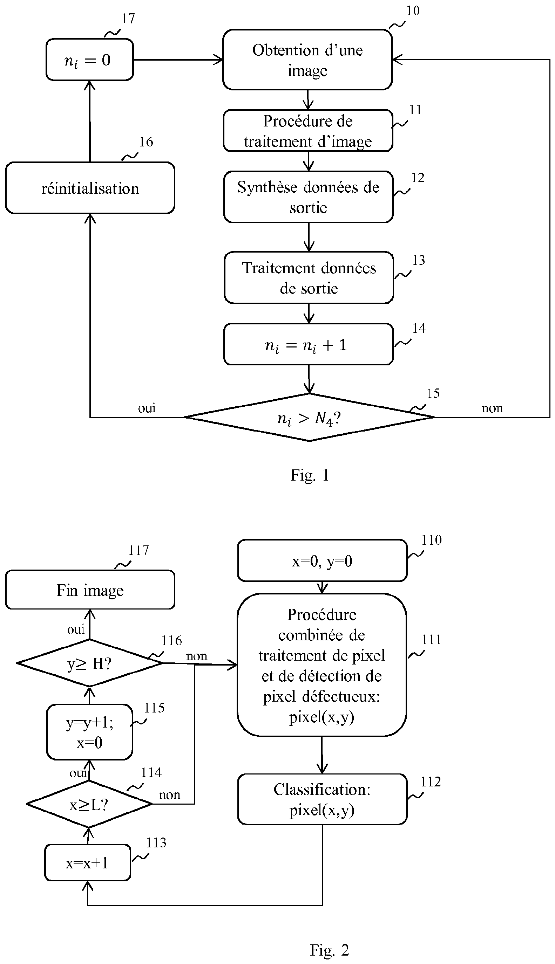

La **Fig. 1** représente schématiquement un exemple de procédé mis en œuvre par le module de traitement d'images 52.

Dans une étape 10, le module de traitement d'images 52 reçoit une image, dite image courante, du dispositif d'acquisition d'images 51. Lorsque l'image reçue est une première image obtenue après mise sous tension du système optronique, le module de traitement d'images 52 associe une pluralité de variables à chaque pixel et initialise ces variables. La pluralité des variables comprend une première variable, que nous appelons valeur de classification, apte à stocker une valeur de classification d'un pixel. La valeur de classification est représentative d'un état du photosite du capteur d'image 510 ayant fourni ledit pixel. Comme nous le décrivons par la suite, un pixel peut être associé à trois valeurs de classification : une valeur de classification appelée « *pixel bon* », indiquant que le photosite du capteur d'images 510 ayant fourni le pixel fonctionne correctement et fournit un pixel valide ; une valeur de classification appelée « *pixel défectueux* », indiquant que le photosite du capteur d'images 510 ayant fourni le pixel est défectueux et fournit un pixel défectueux ; une valeur de classification appelée « *première détection* » qui est une valeur transitoire indiquant d'une part, que le module de traitement de pixels 521 vient de donner un résultat, dit résultat singulier, pour le pixel et d'autre part, que le photosite du capteur d'images 510 ayant fourni le pixel est défectueux et fournit un pixel défectueux. Lorsque l'étape 10 est appliquée à la première image, la valeur de classification de chaque pixel est initialisée à « *pixel bon* ». Par ailleurs, lorsque l'étape 10 est appliquée à la première image, une deuxième variable ${N}_{RS}^{\left(x, y\right)}$ et une troisième variable *N*_{*pixel*(*x*,*y*)} de ladite pluralité, que nous expliquons par la suite en relation avec les Figs. 3A et 3B, sont associées à chaque pixel, et sont initialisées à la valeur « 0 ».

Dans une étape 11, le module de traitement d'images 52 applique une procédure de traitement d'images, que nous détaillons par la suite en relation avec les Fig. 3A et 3B, à l'image courante. Durant la procédure de traitement d'images, les variables de la pluralité de variables associées à chaque pixel, sont remises à jour.

La procédure de traitement d'images permet de plus d'obtenir des données de sortie intermédiaires. Lorsque le système optronique 50 est apte à acquérir des images et à détecter et à suivre des objets dans ces images, les données de sortie intermédiaires sont, par exemple : les pixels d'une image issue de filtrages destinés à atténuer un bruit d'acquisition et/ou à améliorer et/ou détecter des contours dans des images fournies par le dispositif d'acquisition d'images 51; des informations représentatives d'un objet détecté et suivi, telles que, par exemple, des informations représentatives d'une position de l'objet dans l'image, des informations représentatives d'une amplitude de mouvement de l'objet, des informations représentatives d'une vitesse de mouvement de l'objet et des informations représentatives d'une direction de mouvement de l'objet. Ces données de sortie intermédiaires sont fournies par le module de traitement de pixels 521 et/ou le module de détection et de suivi d'objets compris dans le module de traitement d'images.

Dans une étape 12, le module de détection de pixels défectueux 522 du module de traitement d'images 52 détermine un niveau de fiabilité pour chaque donnée de sortie intermédiaire selon un procédé de synthèse de donnée de sortie que nous décrivons en relation avec la Fig. 4.

Dans une étape 13, le module de traitement de données de sortie 523 du module de traitement d'images 52 applique un traitement aux données de sortie intermédiaires en fonction de leur niveau de fiabilité, ce qui permet d'obtenir des données de sortie finales. Dans un mode de réalisation de l'étape 13, le traitement consiste à décider si une donnée de sortie intermédiaire doit être utilisée ou pas. Une donnée de sortie intermédiaire pouvant être utilisée devient une donnée de sortie finale. Par exemple, la décision peut consister à ne pas transmettre au dispositif d'affichage 53 ou au dispositif de stockage, une donnée de sortie intermédiaire associée à un niveau de fiabilité inférieur à un seuil prédéfini. Dans un mode de réalisation de l'étape 13, le traitement consiste à ne pas transmettre au dispositif d'affichage 53 ou au dispositif de stockage, une donnée de sortie intermédiaire associée à un niveau de fiabilité indiquant qu'au moins un pixel défectueux a été utilisé pour obtenir ladite donnée de sortie intermédiaire.

Dans un mode de réalisation de l'étape 13, le traitement consiste à remplacer la donnée de sortie intermédiaire par une donnée de sortie corrigée, la donnée de sortie corrigée étant utilisée par la suite comme donnée de sortie finale. Si, par exemple, une donnée de sortie intermédiaire est une valeur de pixel filtrée, issue d'un pixel défectueux, la valeur de pixel filtrée issue d'un pixel défectueux peut être remplacée par une valeur de pixel obtenue à partir de pixels valides voisins du pixel défectueux.

Dans une étape 14, suite au traitement d'une image, une valeur d'une variable *nᵢ* permettant de comptabiliser un nombre d'images traitées par le module de traitement d'image 52 est incrémentée d'une unité. Dans une étape 15, la valeur de la variable *nᵢ* est comparée à un seuil de réinitialisation correspondant à un nombre d'images *N*₄. Le nombre d'images *N*₄ permet de contrôler une période de réinitialisation de la valeur de classification associée à chaque pixel. De cette manière, un pixel fourni par un photosite du capteur d'images 510 passant temporairement dans un état défectueux, peut être associé à la valeur de classification « *pixel bon* » lorsque ledit photosite repasse dans un état de fonctionnement correct. Si la variable *nᵢ* est supérieure au nombre d'images *N*₄, l'étape 15 est suivie d'une étape 16 de réinitialisation périodique au cours de laquelle la valeur de classification associée à chaque pixel de l'image courante est réinitialisée à la valeur « *pixel bon* ». Par ailleurs, lors de l'étape 16, la variable ${N}_{RS}^{\left(x, y\right)}$ et la variable *N*_{*pixel*(*x*,*y*)}, que nous expliquons par la suite en relation avec les Figs. 3A et 3B, sont réinitialisées à la valeur « 0 ». Dans une étape 17 suivant l'étape 16, la variable *nᵢ* prend la valeur « 0 ». L'étape 17 est suivie de l'étape 10 déjà expliquée, au cours de laquelle une nouvelle image est traitée par le module de traitement d'images 52. Si la variable *nᵢ* est inférieure à *N*₄, le module de traitement d'images 52 retourne à l'étape 10 pour traiter une nouvelle image.

Dans un mode de réalisation, le nombre d'images *N*₄ prend la valeur 25 correspondant à une seconde de séquence d'images acquise avec une fréquence d'images de 25 images par seconde.

La **Fig. 2** représente schématiquement un exemple de procédure de traitement d'images apte à mettre en œuvre l'invention, mise en œuvre par le module de traitement d'images 52. La procédure de traitement d'images correspond à l'étape 11. Dans une étape 110, une variable x et une variable *y* servant à parcourir des pixels dans l'image courante sont initialisées à la valeur « 0 ». La variable *x* est une coordonnée horizontale d'un pixel. La variable *y* est une coordonnée verticale d'un pixel.

Dans une étape 111, un pixel situé à une position indiquée par les variables *x* et *y,* appelé *pixel(x,y)*, est traité par une procédure combinée de traitement de pixel et de détection de pixel défectueux que nous expliquons par la suite en relation avec la Fig. 3A. Au cours de la procédure combinée de traitement de pixel et de détection de pixel défectueux, la valeur de classification associée au pixel *pixel(x,y)* est modifiée, s'il y a lieu, en fonction d'au moins un résultat de mise en œuvre d'au moins une procédure de traitement de pixel.

Dans une étape 112, une procédure de classification de pixel, que nous décrivons par la suite en relation avec la Fig. 3B, est appliquée par le module de traitement d'images 52. La procédure de classification permet de déterminer la valeur de classification à associer au pixel *pixel(x,y).*

Dans une étape 113, la variable *x* est incrémentée d'une unité. Dans une étape 114, la variable x est comparée à une valeur *L* représentant un nombre de pixels dans une ligne de l'image courante. Si la variable *x* est inférieure à la valeur *L,* le module de traitement d'images retourne à l'étape 111 pour poursuivre le traitement de l'image courante.

Si la variable *x* est supérieure ou égal à la valeur *L,* lors d'une étape 115, la variable *x* est mise à la valeur « 0 » et la variable *y* est incrémentée d'une unité pour passer à une ligne suivante de l'image courante. Dans une étape 116, la variable *y* est comparée à une valeur *H* représentant un nombre de pixels par colonne de l'image courante. Si la variable *y* est supérieure à la valeur *H*, le traitement de l'image courante se termine lors d'une étape 117. Si la variable *y* est inférieure à la valeur *H*, le traitement de l'image courante se poursuit lors de l'étape 111.

La **Fig. 3A** illustre schématiquement un exemple de procédure combinée de traitement de pixel et de détection de pixel défectueux comprise dans la procédure de traitement d'images apte à mettre en œuvre l'invention. La procédure combinée de traitement de pixel et de détection de pixel défectueux correspond à l'étape 111. La procédure combinée de traitement de pixel et de détection de pixel défectueux est mise en œuvre conjointement par le module de traitement de pixels 521 et le module de détection de pixels défectueux 522.

Dans une étape 1110, le module de traitement de pixels 521 obtient un pixel *pixel(x,y).*

Dans une étape 1111, le module de traitement de pixels 521 applique au moins une procédure de traitement de pixel au pixel *pixel(x,y).* Par exemple, le module de traitement de pixels 521 filtre le pixel *pixel(x,y)* pour atténuer ou supprimer un bruit d'acquisition dans l'image courante et/ou filtre le pixel *pixel(x,y)* pour améliorer des contours d'objets dans l'image courante et/ou applique au pixel *pixel(x,y)* une méthode de flot optique pour déterminer un mouvement du pixel.

Dans une étape 1112, le module de détection de pixels défectueux 522 analyse au moins un résultat fourni par le module de traitement de pixels 521 afin de détecter un résultat singulier. Le module de détection de pixels défectueux 522 ne met donc pas en œuvre de nouveaux traitements sur l'image courante pour déterminer si un pixel est défectueux, mais utilise des résultats de traitements mis en œuvre par le module de traitement de pixels 521. On crée ainsi une synergie entre le module de traitement de pixels 521 et le module de détection de pixels défectueux 522. Cette synergie permet de réduire le coût calculatoire de la détection de pixels défectueux.

Un résultat singulier est un résultat qu'il est peu probable d'obtenir lors d'un traitement d'une image naturelle. Un résultat singulier peut dont être représentatif d'un défaut sur un photosite du capteur d'images ayant fourni le pixel *pixel(x,y).*

Dans le cas d'un filtrage, un résultat singulier est une valeur de filtrage obtenue après filtrage du pixel *pixel(x,y),* très différente de valeurs de filtrage de pixels voisins du pixel *pixel(x,y).* Soit *̅p̅i̅x̅e̅l̅*̅(̅*̅x̅,̅y̅*̅)̅ la valeur obtenue après filtrage du pixel *pixel(x,y).* La détection d'un résultat singulier consiste, par exemple, à comparer une différence entre la valeur *̅p̅i̅x̅e̅l̅*̅(̅*̅x̅*̅,̅*̅y̅*̅)̅ et la valeur filtrée des pixels voisins du pixel *pixel(x,y)* à un seuil de différence prédéfini. Lorsque la différence est supérieure au seuil prédéfini, on considère que la valeur *̅p̅i̅x̅e̅l̅*̅(̅*̅x̅,̅y̅*̅)̅ est un résultat singulier. Un pixel voisin peut être un pixel voisin spatialement appartenant à l'image courante ou un pixel voisin temporellement situé à une même position spatiale que le pixel *pixel(x,y)* dans une image précédente.

Dans le cas d'une mise en œuvre d'une méthode de flot optique, un résultat singulier consiste à obtenir un pixel immobile, i.e. le pixel *pixel(x,y)* est associé à des informations de mouvement indiquant que le pixel n'a pas de mouvement.

Dans un mode de réalisation, plusieurs résultats du module de traitement de pixels 521 sont combinés pour déterminer si, globalement, le module de traitement de pixels 522 a donné un résultat singulier. Par exemple, un résultat du module de traitement de pixels 522 est considéré comme singulier si le pixel *pixel(x,y)* est associé à des informations de mouvement indiquant que le pixel n'a pas de mouvement et que la valeur *̅p̅i̅x̅e̅l̅*̅(̅*̅x̅*̅,̅*̅y̅*̅)̅ est très différente des valeurs filtrées des pixels voisins du pixel *pixel(x,y).*

Si aucun résultat singulier n'est détecté, la procédure combinée de traitement de pixel et de détection de pixel défectueux se termine lors d'une étape 1116 qui est suivie de l'étape 112. Le pixel conserve alors sa valeur de classification précédente.

Si un résultat singulier est détecté lors de l'étape 1112, le module de détection de pixels défectueux 522 incrémente, dans une étape 1113, la variable ${N}_{RS}^{\left(x, y\right)}$ associée au pixel *pixel(x,y)* d'une unité. La variable ${N}_{RS}^{\left(x, y\right)}$ est utilisée pour comptabiliser un nombre de détections d'un résultat singulier pour le pixel *pixel(x,y).*

Dans une étape 1114, la variable ${N}_{RS}^{\left(x, y\right)}$ est comparée à un seuil de détection de résultats singuliers *N*₁ représentatif d'un nombre maximum admissible de résultats singuliers pour un pixel au-delà duquel, il est considéré que le pixel est défectueux. En utilisant la variable ${N}_{RS}^{\left(x, y\right)}$ et le seuil de détection de résultats singuliers *N*₁, le module de détection de pixels 522 contrôle une réactivité de détection de la procédure combinée de traitement de pixel et de détection de pixel défectueux. Une unique détection d'un résultat singulier pour un pixel ne signifie pas nécessairement que le pixel est défectueux. En effet, il est possible que l'image courante fournisse des valeurs de pixels conduisant à des résultats singuliers même si aucun pixel défectueux n'est présent dans l'image courante. Par contre, la détection de plusieurs résultats singuliers pour un même pixel sur un nombre d'images correspondant à une période de temps suffisamment longue, a une très forte probabilité d'avoir été provoquée par un photosite du capteur d'images 510 défectueux. Par exemple, un photosite du capteur d'images 510 produisant des pixels conduisant systématiquement à une valeur de filtrage très différente de valeurs de filtrage de pixels voisins sur plusieurs images, a de fortes chances d'être défectueux. De même, un photosite du capteur d'images produisant des pixels qui restent immobiles sur plusieurs images, alors que des pixels voisins de ces pixels ont un mouvement, peut être raisonnablement considéré comme défectueux.

Si pour le pixel *pixel(x,y)* la variable ${N}_{RS}^{\left(x, y\right)}$ est inférieure au seuil de détection de résultats singuliers *N*₁, la procédure combinée de traitement de pixel et de détection de pixel défectueux prend fin, lors de l'étape 1116 qui est suivie de l'étape 112. Le pixel *pixel(x,y)* garde la valeur de classification précédente.

Si, par contre, pour le pixel *pixel(x,y)* la variable ${N}_{RS}^{\left(x, y\right)}$ est supérieure au seuil de détection de résultats singuliers *N*₁, lors d'une étape 1115, une variable *S*_{*pixel*(*x*,*y*)} représentative de la valeur de classification associée au pixel *pixel(x,y)* prend la valeur « première détection » indiquant que le pixel *pixel(x,y)* vient de donner une valeur singulière et que le photosite du capteur d'images 510 est défectueux et fournit un pixel défectueux. L'étape 1115 est suivie de l'étape 1116 déjà expliquée.

Dans un mode de réalisation, le seuil de détection de résultats singuliers *N*₁ est un nombre maximum admissible de détections successives d'un résultat singulier pour un pixel *pixel(x,y).*

Dans un mode de réalisation le seuil de détection de résultats singuliers *N*₁ prend la valeur « 1 », i.e. un pixel *pixel(x,y)* est déclaré défectueux si le module de détection de pixels défectueux 522 détecte un résultat singulier pour le pixel *pixel(x,y)* dans une image. Ce mode de réalisation est très réactif.

Dans un mode de réalisation le seuil de détection de résultats singuliers *N*₁ prend la valeur « 16 », i.e. un pixel *pixel(x,y)* est déclaré défectueux si le module de détection de pixels défectueux 522 détecte « 16 » résultats singuliers pour le pixel *pixel(x,y)* dans « 16 » images successives. Ce mode de réalisation permet de détecter un pixel défectueux avec une faible probabilité d'erreur.

Dans un mode de réalisation, le seuil de détection de résultats singuliers *N*₁ est un nombre maximum admissible de détections d'un résultat singulier pour un pixel *pixel(x,y)* sur une période de temps correspondant à un nombre d'images *N*₂ égal à un seuil. Par exemple, le seuil de détection de résultats singuliers *N*₁ prend la valeur « 16 » et le nombre d'images *N*₂ prend la valeur « 20 », i.e. un pixel *pixel(x,y)* est déclaré défectueux si le module de détection de pixels défectueux 522 détecte « 16 » résultats singuliers pour le pixel *pixel(x,y)* dans un ensemble de « 20 » images successives.

La **Fig. 3B** représente schématiquement un exemple de procédure de classification de pixel comprise dans la procédure de traitement d'images apte à mettre en œuvre l'invention. La procédure de classification est mise en œuvre par le module de détection de pixels défectueux 522 et correspond à l'étape 112. La procédure de classification a deux objectifs : d'une part elle permet de mettre à jour la valeur de classification de chaque pixel défectueux, et d'autre part, de contrôler combien de temps un pixel correspondant à un photosite du capteur d'images 510 qui a été détecté comme défectueux, doit continuer à être considéré comme défectueux. On considère en effet, qu'un photosite du capteur d'images 510 qui a été détecté comme défectueux, a une forte probabilité d'être dans un état instable. Par conséquent, même si aucun résultat singulier n'est constaté pour un pixel correspondant à ce photosite du capteur d'images 510, il est préférable d'attendre un certain nombre d'images avant de considérer que le photosite du capteur d'images 510 fonctionne de nouveau correctement. La variable *S*_{*pixel*(*x*,*y*)} associée au pixel *pixel(x,y)* ne prend donc pas la valeur «pixel bon » dès qu'un résultat non singulier est obtenu pour le pixel *pixel(x,y)*, mais attend qu'un résultat non singulier soit obtenu pour le pixel *pixel(x,y)* pendant une période de temps correspondant à un nombre d'images successives égal à un seuil *N*₃. Dans un mode de réalisation *N*₃ = *N*₄.

Dans une étape 1120, le module de détection de pixels défectueux vérifie la valeur de la variable *S*_{*pixel*(*x,y*)}. Si la variable *S*_{*pixel*(*x,y*)} est égale à la valeur « *première détection* », l'étape 1120 est suivie d'une étape 1125 au cours de laquelle, la variable *N*_{*pixel*(*x*,*y*)} prend la valeur du seuil *N*₃. La variable *N*_{*pixel*(*x*,*y*)} permet de comptabiliser combien de fois un traitement mis en œuvre sur le pixel *pixel(x,y)* par le module de traitement de pixels 521 a donné un résultat non singulier.

Dans une étape 1126, le module de détection de pixels défectueux 522 met la valeur de classification *S*_{*pixel*(*x*,*y*)} associée au pixel *pixel(x,y)* à la valeur « *pixel défectueux ».*

L'étape 1126 est suivie d'une étape 1127 qui met fin à la procédure de classification de pixel et est suivie de l'étape 12.

Si la variable *S*_{*pixel*(*x*,*y*)} n'est pas égale à la valeur « *première détection »,* l'étape 1120 est suivie d'une étape 1121.

Au cours de l'étape 1121, le module de détection de pixels défectueux 522 détermine si la variable *S*_{*pixel*(*x*,*y*)} est égale à la valeur « *pixel défectueux* ». Un pixel associé à la valeur de classification « *pixel défectueux* » lors de l'étape 1121 est un pixel pour lequel un résultat non singulier a été obtenu pour l'image courante, mais fourni par un photosite du capteur d'images 510 pour laquelle, au moins un résultat singulier a été obtenu dans une image comprise dans les *N*₃ images précédant l'image courante. Si la variable *S*_{*pixel*(*x*,*y*)} n'est pas égale à la valeur « *pixel défectueux* », l'étape 1121 est suivie de l'étape 1127 déjà expliquée qui est suivie de l'étape 12.

Si, la variable *S*_{*pixel*(*x*,*y*)} est égale à la valeur « *pixel défectueux* », l'étape 1121 est suivie de l'étape 1122 au cours de laquelle la variable *N*_{*pixel*(*x*,*y*)} est décrémentée d'une unité.

Dans une étape 1123, on compare la variable *N*_{*pixel*(*x*,*y*)} à la valeur « 0 ». Si la variable *N*_{*pixel*(*x*,*y*)} est à la valeur « 0 », la valeur de classification « *S*_{*pixel*(*x,y*)} » est mise à la valeur « *pixel bon* » indiquant que le photosite du capteur d'images 510 ayant fourni le pixel est considéré comme fonctionnant correctement. L'étape 1124 est suivie de l'étape 1127 qui est suivie de l'étape 12.

L'étape 1123 est suivie de l'étape 1127 lorsque la variable *N*_{*pixel*(*x*,*y*)} est à la valeur « 0 ».

La **Fig. 4** représente schématiquement un exemple de procédure de synthèse de résultats de mise en œuvre de la procédure de traitement d'images apte à mettre en œuvre l'invention. La procédure de synthèse des résultats de mise en œuvre de la procédure de traitement d'images correspond à l'étape 12. Durant la procédure de synthèse des résultats de mise en œuvre de la procédure de traitement d'images, le module de détection de pixels défectueux 522 détermine un niveau de fiabilité pour chaque donnée de sortie intermédiaire du module de traitement d'image 52 en fonction de la valeur de classification associée à chaque pixel impliqué dans un résultat d'une procédure de traitement de pixel permettant d'obtenir ladite donnée de sortie intermédiaire.

Dans une étape 120, le module de détection de pixels défectueux obtient la valeur de classification *S*_{*pixel*(*x*,*y*)} associée à chaque pixel *pixel(x,y)* de l'image courante. Dans une étape 121, des variables *x et y* servant au parcours des pixels de l'image courante sont initialisées à la valeur « 0 ».

Dans une étape 122, chaque donnée de sortie intermédiaire du module de traitement d'images 52 est initialisée à un niveau de fiabilité égal à un niveau de fiabilité maximal *C*.

Dans une étape 123, le module de détection de pixels défectueux détermine si le pixel *pixel(x,y)* est associé à une valeur de classification égale à la valeur « *pixel défectueux* ». Si le pixel *pixel(x,y)* est associé à une valeur de classification égale à la valeur « *pixel défectueux* », l'étape 123 est suivie de l'étape 124.

Lors de l'étape 124, le module de détection de pixels défectueux 522 parcourt un ensemble comprenant chaque donnée de sortie intermédiaire obtenue à partir d'un traitement mis en œuvre par le module de traitement d'images 52 pour déterminer le niveau de fiabilité de chaque donnée de sortie intermédiaire. Pour chaque donnée de sortie intermédiaire, le module de détection de pixels défectueux 522 détermine si cette donnée de sortie intermédiaire dépend du pixel *pixel(x,y).* Si la donnée de sortie intermédiaire dépend du pixel *pixel(x,y)*, le niveau de fiabilité associé à cette donnée de sortie intermédiaire est diminué par exemple en le divisant par deux.

Dans un mode de réalisation, la donnée de sortie intermédiaire est un pixel issu d'un filtrage par le module de traitement de pixels 521, dit pixel filtré. Le pixel filtré est généralement obtenu par convolution de pixels d'une image issue du capteur d'images avec un noyau de convolution représentant un filtre. Le noyau de convolution est en général une matrice à une ou deux dimensions. La convolution implique le pixel à filtrer et des pixels au voisinage du pixel à filtrer. Si, parmi les pixels impliqués dans le filtrage, un pixel est considéré comme défectueux, le niveau de fiabilité de la donnée de sortie intermédiaire correspondante est diminué.

Dans un mode de réalisation, lorsqu'une donnée de sortie intermédiaire comprend des coordonnées d'un objet suivi et des informations de mouvement de l'objet suivi, la donnée de sortie intermédiaire est en général obtenue par combinaison d'informations de mouvement associées à des pixels contenus dans l'objet suivi, lesdites informations ayant été obtenues par le module de traitement de pixels 521. Si, parmi les informations de mouvement combinées, au moins une information est associée à un pixel défectueux, le niveau de fiabilité de la donnée de sortie intermédiaire correspondante est diminué.

Une donnée de sortie intermédiaire associée à un niveau de fiabilité inférieur au niveau de fiabilité maximum *C* indique qu'au moins un pixel défectueux a été utilisé pour obtenir la donnée de sortie intermédiaire.

L'étape 124, et l'étape 123 lorsque la variable *S*_{*pixel*(*x*,*y*)} n'est pas égale à la valeur « *pixel défectueux* », sont suivies des étapes 125 à 129 respectivement identiques aux étapes 112 à 116.

La procédure de synthèse des résultats de mise en œuvre de la procédure de traitement d'images fournit alors des données de sortie intermédiaires associées chacune à un niveau de fiabilité modulé en prenant en compte d'éventuelles dépendance vis-à-vis de pixels défectueux. Ces données de sortie intermédiaires sont ensuite utilisées lors de l'étape 13 pour déterminer des données de sortie finales.

## Revendications

1. Procédé de détection de pixels défectueux compris dans une procédure de traitement d'images comprenant une procédure de traitement de pixel, la procédure de traitement de pixel étant appliquée à des pixels d'au moins une image issue d'un capteur d'images (510), chaque pixel correspondant à un élément actif du capteur d'images, dit photosite, apte à convertir un faisceau de lumière incident en signal électrique, chaque pixel étant associé à une valeur de classification représentative d'un état dudit pixel, **caractérisé en ce que** le procédé comprend l'étape suivante :
• appliquer (111) une procédure combinée de traitement de pixel et de détection de pixel défectueux à chaque pixel d'une image, dite image d'entrée, comprenant, pour chaque pixel:
∘ appliquer (1111), par un premier module de traitement (521) a procédure de traitement de pixel audit pixel, la procédure de traitement de pixel fournissant, lorsqu'elle est appliquée à des pixels de ladite image d'entrée, une image, dite image résultante, dans laquelle un bruit d'acquisition a été atténué et/ou des contours ont été améliorés et/ou des contours ont été détectés et/ou fournissant des informations représentatives d'un objet détecté et suivi dans ladite image d'entrée ; et,
∘ suite à l'application de la procédure de traitement de pixel audit pixel par le premier module de traitement, appliquer, par un deuxième module de traitement (522), des étapes de détection de pixels défectueux comprenant :
▪ analyser (1112) un résultat fourni par la procédure de traitement de pixel ;
▪ en cas d'obtention d'un résultat singulier représentatif d'un défaut sur un photosite du capteur d'images ayant fournie ledit pixel, incrémenter (1113) une variable (N_{RS}^{(x,y)}) représentative d'un nombre de détections d'un résultat singulier pour ledit pixel ; et,
▪ associer (1115) ledit pixel à une valeur de classification représentative d'un pixel défectueux lorsque ladite variable atteint un premier seuil (1114, N1) représentatif d'un nombre maximum de résultats singuliers.

2. Procédé selon la revendication 1 **caractérisé en ce que**, le procédé est appliqué à une séquence d'images successives issues du capteur d'images et **en ce que** le premier seuil est un nombre maximum de résultats singuliers admissible sur une période de temps correspondant à un nombre d'images égal à un deuxième seuil.

3. Procédé selon la revendication 1 ou 2 **caractérisé en ce que**, lorsqu'un pixel d'une première image est associé à une valeur de classification représentative d'un pixel défectueux, ledit pixel est considéré comme défectueux tant que la procédure de traitement de pixel ne donne pas, pour ledit pixel, un résultat non singulier, non représentatif d'un défaut sur un photosite du capteur d'images ayant fourni ledit pixel, pendant une période de temps correspondant à un nombre d'images successives égal à un troisième seuil.

4. Procédé selon la revendication 1, 2 ou 3 **caractérisé en ce qu'**une procédure (16) de réinitialisation périodique à une valeur de classification représentative d'un pixel non défectueux est appliquée à la valeur de classification associée à chaque pixel, la réinitialisation périodique se faisant avec une période prédéfinie correspondant à un nombre d'images égal à un quatrième seuil.

5. Procédé de détermination d'un niveau de fiabilité d'au moins une donnée de sortie d'une procédure de traitement d'images, chaque donnée de sortie étant obtenue à partir d'au moins un résultat d'une procédure de traitement de pixel comprise dans la procédure de traitement d'images, **caractérisé en ce que** le procédé comprend les étapes suivantes :
• appliquer le procédé de détection de pixels défectueux selon l'une quelconque des revendications 1 à 4 ;
• déterminer (124) le niveau de fiabilité de chaque donnée de sortie en fonction de la valeur de classification associée à chaque pixel impliqué dans un résultat de la procédure de traitement de pixel permettant d'obtenir ladite donnée de sortie.

6. Procédé selon la revendication 5 **caractérisé en ce que**, le procédé comprend, en outre, pour chaque donnée de sortie, une étape (13) de décision d'utilisation ou de remplacement de ladite donnée de sortie en fonction du niveau de fiabilité de ladite donnée de sortie, une donnée de sortie étant utilisée pour un affichage de ladite donnée de sortie et/ou une sauvegarde de ladite donnée de sortie et/ou un déclenchement d'une alarme correspondant à ladite donnée de sortie.

7. Dispositif apte à détecter des pixels défectueux compris dans un dispositif de traitement d'images comprenant un module de traitement de pixels apte à traiter des pixels d'au moins une image issue d'un capteur d'images (51), chaque pixel correspondant à un élément actif du capteur d'images (510), dit photosite, apte à convertir un faisceau de lumière incident en signal électrique, **caractérisé en ce que** ledit dispositif apte à détecter des pixels défectueux comprend les moyens suivants :
∘ des premiers moyens traitement (521) pour obtenir un résultat d'une mise en œuvre du module de traitement de pixels sur un pixel, la procédure de traitement de pixel fournissant, lorsqu'elle est appliquée à des pixels d'une image, dite image d'entrée, un image, dite image résultante, dans laquelle un bruit d'acquisition a été atténué et/ou des contours ont été améliorés et/ou des contours ont été détectés et/ou des informations représentatives d'un objet détecté et suivi dans ladite image d'entrée;
∘ des deuxièmes moyens de traitement (522) pour appliquer des étapes de détection de pixels défectueux comprenant :
▪ des moyens (1112) pour identifier un résultat du module de traitement d'images singulier représentatif d'un défaut sur un photosite du capteur d'images ayant fournie un pixel,
▪ des moyens pour incrémenter (1113) une variable (N_{RS}^{(x,y)}) représentative d'un nombre de résultats singuliers obtenus pour un pixel ;
▪ des moyens pour associer (1115) un pixel à une valeur de classification représentative d'un pixel défectueux lorsque ladite variable atteint un premier seuil (1114, N1) représentatif d'un nombre maximum de résultats singuliers admissible ;

8. Dispositif de traitement d'images (52) comprenant un module de traitement de pixels (521) apte à traiter des pixels d'au moins une image issues d'un capteur d'images (510) et un dispositif selon la revendication 7.

9. Système optronique (50) comprenant un système d'acquisition d'images (51) muni d'un capteur d'images (510), un dispositif de traitement d'images (52) selon la revendication 8 et un dispositif d'affichage d'images (53) et/ou de stockage d'images.

10. Produit programme d'ordinateur, **caractérisé en ce qu'**il comporte des instructions pour mettre en œuvre, par un dispositif, le procédé selon l'une quelconque des revendications 1 à 4, lorsque ledit programme est exécuté par un processeur dudit dispositif.

11. Unité de stockage, **caractérisée en ce qu'**elle stocke un programme d'ordinateur comportant des instructions pour mettre en œuvre, par un dispositif, le procédé selon l'une quelconque des revendications 1 à 4 lorsque ledit programme est exécuté par un processeur dudit dispositif.

## Patentansprüche

1. Verfahren zur Erkennung fehlerhafter Bildpunkte, das in einer Bildverarbeitungsprozedur umfassend eine Bildpunktverarbeitungsprozedur enthalten ist, wobei die Bildpunktverarbeitungsprozedur auf Bildpunkte mindestens eines Bilds von einem Bildsensor (510) angewandt wird, wobei jeder Bildpunkt einem aktiven Element des Bildsensors, Photosite genannt, entspricht, das geeignet ist, ein einfallendes Lichtbündel in ein elektrisches Signal umzuwandeln, wobei jeder Bildpunkt einem Klassifizierungswert zugeordnet wird, der für einen Zustand des Bildpunkts repräsentativ ist, **dadurch gekennzeichnet, dass** das Verfahren den folgenden Schritt umfasst:
• Anwenden (111) einer kombinierten Prozedur der Bildpunktverarbeitung und des Erkennens fehlerhafter Bildpunkte auf jeden Bildpunkt eines Bilds, Eingangsbild genannt, umfassend für jeden Bildpunkt:
o Anwenden (1111), durch ein erstes Verarbeitungsmodul (521), der Bildpunktverarbeitungsprozedur auf den Bildpunkt, wobei die Bildpunktverarbeitungsprozedur, wenn sie auf Bildpunkte des Eingangsbilds angewandt wird, ein Bild, Ergebnisbild genannt, bereitstellt, in welchem ein Erfassungsrauschen gemindert und/oder Konturen verbessert und/oder Konturen erkannt wurden, und/oder Informationen bereitstellt, die für ein Objekt, das im Eingangsbild erkannt ist und verfolgt wird, repräsentativ sind; und,
o nach dem Anwenden der Bildpunktverarbeitungsprozedur auf den Bildpunkt durch das erste Verarbeitungsmodul, Anwenden, durch ein zweites Verarbeitungsmodul (522) der Schritte des Erkennens fehlerhafter Bildpunkte umfassend:
▪ Analysieren (1112) eines Ergebnisses, das durch die Bildpunktverarbeitungsprozedur bereitgestellt wird;
▪ bei Erhalt eines singulären Ergebnisses, das für einen Fehler auf einer Photosite des Bildsensors repräsentativ ist, der den Bildpunkt bereitgestellt hat, Inkrementieren (1113) einer Variablen (N_{RS}^{(x,y)}), die für eine Anzahl von Erkennungen eines singulären Ergebnisses für den Bildpunkt repräsentativ ist; und,
▪ Zuordnen (1115) des Bildpunkts an einen Klassifizierungswert, der für einen fehlerhaften Bildpunkt repräsentativ ist, wenn die Variable eine erste Schwelle (1114, N1) erreicht, die für eine maximale Anzahl von singulären Ergebnissen repräsentativ ist.

2. Verfahren nach Anspruch 1, **dadurch gekennzeichnet, dass** das Verfahren auf eine Sequenz aufeinanderfolgender Bilder vom Bildsensor angewandt wird, und dadurch, dass die erste Schwelle eine maximale Anzahl von singulären Ergebnissen ist, die über einen Zeitraum zulässig ist, der einer Anzahl von Bildern entspricht, die gleich einer zweiten Schwelle ist.

3. Verfahren nach Anspruch 1 oder 2, **dadurch gekennzeichnet, dass**, wenn ein Bildpunkt eines ersten Bilds einem Klassifizierungswert zugeordnet ist, der für einen fehlerhaften Bildpunkt repräsentativ ist, der Bildpunkt als fehlerhaft betrachtet wird, soweit die Bildpunktverarbeitungsprozedur für den Bildpunkt während eines Zeitraums, der einer Anzahl von aufeinanderfolgenden Bildern entspricht, die gleich einer dritten Schwelle ist, kein nicht singuläres Ergebnis liefert, das für einen Fehler auf einer Photosite des Bildsensors nicht repräsentativ ist, der den Bildpunkt bereitgestellt hat.

4. Verfahren nach Anspruch 1, 2 oder 3, **dadurch gekennzeichnet, dass** eine Prozedur (16) des periodischen Zurücksetzens auf einen Klassifizierungswert, der für einen nicht fehlerhaften Bildpunkt repräsentativ ist, auf den Klassifizierungswert angewandt wird, der jedem Bildpunkt zugeordnet ist, wobei das periodische Zurücksetzen mit einer vorgegebenen Periode erfolgt, die einer Anzahl von Bildern entspricht, die gleich einer vierten Schwelle ist.

5. Verfahren zur Bestimmung eines Verlässlichkeitsniveaus mindestens eines Ausgangsdatenwerts einer Bildverarbeitungsprozedur, wobei jeder Ausgangsdatenwert anhand mindestens eines Ergebnisses einer Bildpunktverarbeitungsprozedur erhalten wird, die in der Bildverarbeitungsprozedur enthalten ist, **dadurch gekennzeichnet, dass** das Verfahren die folgenden Schritte umfasst:
• Anwenden des Verfahrens zur Erkennung fehlerhafter Bildpunkte nach einem der Ansprüche 1 bis 4;
• Bestimmen (124) des Verlässlichkeitsniveaus jedes Ausgangsdatenwerts in Abhängigkeit vom Klassifizierungswert, der jedem Bildpunkt zugeordnet ist, der an einem Ergebnis der Bildpunktverarbeitungsprozedur beteiligt ist, das es gestattet, den Ausgangsdatenwert zu erhalten.

6. Verfahren nach Anspruch 5, **dadurch gekennzeichnet, dass** das Verfahren ferner für jeden Ausgangsdatenwert einen Schritt (13) des Entscheidens über die Nutzung oder den Austausch des Ausgangsdatenwerts in Abhängigkeit vom Verlässlichkeitsniveau des Ausgangsdatenwerts umfasst, wobei ein Ausgangsdatenwert für eine Anzeige des Ausgangsdatenwerts und/oder eine Sicherung des Ausgangsdatenwerts und/oder eine Auslösung eines Alarms, der dem Ausgangsdatenwert entspricht, genutzt wird.

7. Vorrichtung, die geeignet ist, fehlerhafte Bildpunkte zu erkennen, die in einer Bildverarbeitungsvorrichtung enthalten ist, die ein Bildpunktverarbeitungsmodul umfasst, das geeignet ist, Bildpunkte mindestens eines Bilds von einem Bildsensor (51) zu verarbeiten, wobei jeder Bildpunkt einem aktiven Element des Bildsensors (510), Photosite genannt, entspricht, das geeignet ist, ein einfallendes Lichtbündel in ein elektrisches Signal umzuwandeln, **dadurch gekennzeichnet, dass** die Vorrichtung, die geeignet ist, fehlerhafte Bildpunkte zu erkennen, die folgenden Mittel umfasst:
o erste Verarbeitungsmittel (521) zum Erhalt eines Ergebnisses einer Anwendung des Bildpunktverarbeitungsmoduls auf einen Bildpunkt, wobei die Bildpunktverarbeitungsprozedur, wenn sie auf Bildpunkte eines Bilds, Eingangsbild genannt, angewandt wird, ein Bild, Ergebnisbild genannt, bereitstellt, in welchem ein Erfassungsrauschen gemindert und/oder Konturen verbessert und/oder Konturen erkannt wurden, und/oder Informationen, die für ein Objekt, das im Eingangsbild erkannt ist und verfolgt wird, repräsentativ sind;
o zweite Verarbeitungsmittel (522) zur Anwendung der Schritte des Erkennens fehlerhafter Bildpunkte, umfassend:
▪ Mittel (1112) zur Identifikation eines singulären Ergebnisses des Bildverarbeitungsmoduls, das für einen Fehler auf einer Photosite des Bildsensors repräsentativ ist, der einen Bildpunkt bereitgestellt hat,
▪ Mittel zum Inkrementieren (1113) einer Variablen (N_{RS}^{(x,y)}), die für eine Anzahl von singulären Ergebnissen repräsentativ ist, die für einen Bildpunkt erhalten wurden;
▪ Mittel zum Zuordnen (1115) eines Bildpunkts an einen Klassifizierungswert, der für einen fehlerhaften Bildpunkt repräsentativ ist, wenn die Variable eine erste Schwelle (1114, N1) erreicht, die für eine maximale Anzahl von zulässigen singulären Ergebnissen repräsentativ ist;

8. Bildverarbeitungsvorrichtung (52) umfassend ein Bildpunktverarbeitungsmodul (521), das geeignet ist, Bildpunkte mindestens eines Bilds von einem Bildsensor (510) zu verarbeiten, und eine Vorrichtung nach Anspruch 7.

9. Optronisches System (50) umfassend ein Bilderfassungssystem (51), das mit einem Bildsensor (510), einer Bildverarbeitungsvorrichtung (52) nach Anspruch 8 und einer Bildanzeigevorichtung (53) und/oder Bildspeichervorrichtung ausgestattet ist.

10. Computerprogrammprodukt, **dadurch gekennzeichnet, dass** es Anweisungen aufweist, um durch eine Vorrichtung das Verfahren nach einem der Ansprüche 1 bis 4 durchzuführen, wenn das Programm von einem Prozessor der Vorrichtung ausgeführt wird.

11. Speichereinheit, **dadurch gekennzeichnet, dass** sie ein Computerprogramm speichert, das Anweisungen aufweist, um durch eine Vorrichtung das Verfahren nach einem der Ansprüche 1 bis 4 durchzuführen, wenn das Programm von einem Prozessor der Vorrichtung ausgeführt wird.

## Claims

1. Method for detecting defective pixels, said method being comprised in an image-processing procedure comprising a pixel-processing procedure, the pixel-processing procedure being applied to pixels of at least one image output from an image sensor (510), each pixel corresponding to one active image-sensor element referred to as a photosite, able to convert an incident light beam into an electrical signal, each pixel being associated with a classification value representative of a state of said pixel, **characterized in that** the method comprises the following step:
• applying (111) a combined pixel-processing and defective-pixel-detecting procedure to each pixel of an image referred to as the input image, this comprising, for each pixel:
∘ applying (1111), by means of a first processing module (521), the pixel-processing procedure to said pixel, the pixel-processing procedure delivering, when it is applied to pixels of said input image, an image referred to as the resultant image, in which an acquisition noise has been attenuated and/or edges have been improved and/or edges have been detected and/or providing information representative of an object detected and tracked in said input image; and
∘ after the pixel-processing procedure has been applied to said pixel by means of the first processing module, applying, by means of a second processing module (522), steps of detecting defective pixels, comprising:
▪ analysing (1112) a result delivered by the pixel-processing procedure;
▪ in the event of a singular result representative of a defect in an image-sensor photosite that delivered said pixel being obtained, incrementing (1113) a variable (N_{RS}^{(x,y)}) representative of a number of detections of a singular result for said pixel; and,
▪ associating (1115) said pixel with a classification value representative of a defective pixel when said variable reaches a first threshold (1114, N1) representative of a maximum number of singular results.

2. Method according to Claim 1, **characterized in that** the method is applied to a sequence of successive images output from the image sensor, and **in that** the first threshold is a maximum number of singular results acceptable over a time period corresponding to a number of images equal to a second threshold.

3. Method according to Claim 1 or 2, **characterized in that**, when a pixel of a first image is associated with a classification value representative of a defective pixel, said pixel is considered to be defective if the pixel-processing procedure does not yield, for said pixel, a non-singular result that is not representative of a defect in an image-sensor photosite that delivered said pixel during a time period corresponding to a number of successive images equal to a third threshold.

4. Method according to Claim 1, 2 or 3, **characterized in that** a periodic reset procedure (16) is applied to the classification value associated with each pixel in order to reset it to a classification value representative of a non-defective pixel, the periodic reset being carried out with a predefined period corresponding to a number of images equal to a fourth threshold.

5. Method for determining a reliability level of at least one output datum of an image-processing procedure, each output datum being obtained on the basis of at least one result of a pixel-processing procedure comprised in the image-processing procedure, **characterized in that** the method comprises the following steps:
• applying the defective-pixel-detecting method according to any one of Claims 1 to 4;
• determining (124) the reliability level of each output datum depending on the classification value associated with each pixel involved in a result of the pixel-processing procedure allowing said output datum to be obtained.

6. Method according to Claim 5, **characterized in that** the method furthermore comprises, for each output datum, a step (13) of deciding to use or replace said output datum depending on the reliability level of said output datum, an output datum being used for displaying said output datum and/or storage of said output datum and/or trigger of an alarm corresponding to said output datum.

7. Device able to detect defective pixels, said device being comprised in an image-processing device comprising a pixel-processing module able to process pixels of at least one image output from an image sensor (51), each pixel corresponding to one active image-sensor element (510) referred to as a photosite, able to convert an incident light beam into an electrical signal, **characterized in that** said device able to detect defective pixels comprises the following means:
∘ first processing means (521) for obtaining a result of an application of the pixel-processing module to a pixel, the pixel-processing procedure delivering, when it is applied to pixels of an image referred to as the input image, an image referred to as the resultant image, in which an acquisition noise has been attenuated and/or edges have been improved and/or edges have been detected and/or information representative of an object detected and tracked in said input image; and
∘ second processing means (522) for applying defective-pixel-detecting steps, comprising:
▪ means (1112) for identifying a singular image-processing-module result representative of a defect in an image-sensor photosite that delivered a pixel;
▪ means for incrementing (1113) a variable (N_{RS}^{(x,y)}) representative of a number of singular results obtained for a pixel;
▪ means for associating (1115) a pixel with a classification value representative of a defective pixel when said variable reaches a first threshold (1114, N1) representative of a maximum number of singular results acceptable.

8. Image-processing device (52) comprising a pixel-processing module (521) able to process pixels of at least one image output from an image sensor (510) and a device according to Claim 7.

9. Optronic system (50) comprising an image-acquiring system (51) equipped with an image sensor (510), an image-processing device (52) according to Claim 8 and an image-displaying and/or image-storing device (53).

10. Computer-program product, **characterized in that** it contains instructions for implementing, by means of a device, the method according to any one of Claims 1 to 4, when said program is executed by a processor of said device.

11. Storage unit, **characterized in that** it stores a computer program containing instructions for implementing, by means of a device, the method according to any one of Claims 1 to 4 when said program is executed by a processor of said device.
